# EUROPÄISCHE PATENTSCHRIFT

(11) **EP 4 632 270 B1**
(45) Veröffentlichungstag und Bekanntmachung des Hinweises auf die Patenterteilung: **07.10.2026**
(21) Anmeldenummer: 25168857.8
(22) Anmeldetag: 07.04.2025
(51) Int. Cl.: F21S 43/14, F21S 43/237, F21S 43/245, F21S 43/247, F21S 43/20, F21V 8/00

(54) **BELEUCHTUNGSEINRICHTUNG FÜR KRAFTFAHRZEUGE**
LIGHTING DEVICE FOR MOTOR VEHICLES
DISPOSITIF D'ÉCLAIRAGE POUR VÉHICULES AUTOMOBILES

(30) Priorität: 11.04.2024 CZ 20240133
(43) Veröffentlichungstag der Anmeldung: 15.10.2025
(73) Patentinhaber: Skoda Auto a.s., 29301 Mladá Boleslav (CZ)
(72) Erfinder: Galbavý, Jan, 29406 idn ves (CZ); Vittek, Eduard, 27601 M lník (CZ)

(56) Entgegenhaltungen:
- WO-A1-2014/141597
- WO-A1-2016/009156
- CN-U- 218 895 332
- FR-A1- 3 139 176
- JP-A- 2016 143 632

## Beschreibung

### Technisches Sachgebiet

Die vorliegende Erfindung fällt in das Gebiet der Beleuchtungseinrichtungen für Kraftfahrzeuge. Konkret betrifft sie den Lichtleiter, mit dem eine homogenere Beleuchtung des Lichtleiters über seine gesamte Länge erreicht wird.

### Stand der Technik

Aus dem Stand der Technik sind Beleuchtungseinrichtungen für Kraftfahrzeuge bekannt, die längliche Lichtleiter umfassen, die typischerweise aus transparentem Kunststoff, z. B. Acrylat, gefertigt sind. Lichtleiter werden verwendet, um das Licht aus einer Lichtquelle in die gewünschte Richtung und in der gewünschten Intensität zu leiten und auszustrahlen. Die Lichtquelle, z. B. eine LED, wird in der Regel an einem oder beiden Enden eines länglichen Lichtleiters angebracht, und das Licht wird aus der Quelle über die gesamte Länge des Lichtleiters geleitet. Um eine gleichmäßige Leitung und Ausstrahlung vom Licht zu gewährleisten, werden die Lichtleiter üblicherweise mit optischen Elementen zur Auskopplung, Brechung, Streuung und Reflexion des Lichts ausgestattet. Im Endabschnitt des Lichtleiters ist das von der Quelle ausgehende Licht in der Regel nicht ausreichend homogen; es muss mehrere Zentimeter durch den Lichtleiter wandern, um ausreichend homogenisiert zu werden. Die Intensität des Lichts in den Endabschnitten der Lichtleiter ist daher ungleichmäßig. Dieses Problem wird in der Regel dadurch gelöst, dass der Endabschnitt des Lichtleiters (die ersten paar Zentimeter) beschattet wird. Der beschattete Endabschnitt des Lichtleiters erfordert jedoch zusätzlichen Montageplatz.

Das Verfahren zur Leitung des Lichts durch den Lichtleiter ist beispielsweise in dem Dokument US 8956026 B2 beschrieben, in dem das von der Quelle am Anfang des Lichtleiters kommende Licht durch eine mit mehreren Arten von optischen Elementen ausgestattete Oberfläche homogenisiert wird, damit es sich gleichmäßig im Hauptabschnitt des Lichtleiters ausbreitet. Der Endabschnitt des Lichtleiters, in dem die Homogenisierung stattfindet, strahlt jedoch selbst kein homogenes Licht aus.

Eine günstige Lösung wäre hier der Anschluss eines Lichtleiters, bei dem das Licht gleichmäßig über seine gesamte Länge und damit auch in den Endabschnitten ausgestrahlt wird.

Eine gattungsgemäße Beleuchtungseinrichtung für Kraftfahrzeuge ist aus WO 2014/141597 A1 bekannt.

### Zusammenfassung der Erfindung

Die Mängel der aus dem Stand der Technik bekannten Lösungen werden durch eine Beleuchtungseinrichtung für ein Kraftfahrzeug bis zu einem gewissen Grade beseitigt, wobei die Einrichtung eine Lichtquelle und einen Lichtleiter aus transparentem Material umfasst.

Der Lichtleiter umfasst einen Hauptabschnitt, einen Endabschnitt und mindestens ein freies Ende. Ein Abschnitt des Lichtleiters stellt einen Teil seiner Länge dar. Das freie Ende ist die aus der Richtung der Lichtquelle sichtbare Randfläche des Endabschnitts senkrecht zur optischen Achse des Lichtleiters. Der Endabschnitt befindet sich zwischen dem freien Ende und dem Hauptabschnitt und enthält einen Hohlraum und eine Fläche für den Lichteintritt, wobei die Längsachse des Lichtleiters durch den Hohlraum verläuft und der Hohlraum am freien Ende des Lichtleiters offen ist. Ein Hohlraum ist ein Ausschnitt im Endabschnitt eines Lichtleiters, der zumindest in Richtung des Lichtaustritts aus dem Lichtleiter und in Richtung der Längsachse des Lichtleiters geschlossen ist. Die Lichtquelle reicht in den Hohlraum hinein und ist auf die Fläche für den Lichteintritt in Richtung der Längsachse des Lichtleiters gerichtet.

Der Hauptabschnitt enthält eine Fläche zur Lichtauskopplung parallel zur Längsachse des Lichtleiters und ist mit Auskopplungselementen für die Reflexion des Lichts aus dem Lichtleiter heraus (d. h. in der oben genannten Richtung des Lichtaustritts) versehen. Der Endabschnitt des Lichtleiters umfasst mikroskopisches Aufrauen der Oberfläche für unkontrollierte Lichtstreuung und makroskopische streuende optische Elemente für kontrollierte Lichtstreuung.

Der Lichtleiter kann aus transparentem Kunststoff, wie zum Beispiel Polyacrylat, Polycarbonat und Polyurethan hergestellt werden. Diese Materialien sind leicht zu formen, hochtransparent, UV-beständig, stark und flexibel. Die Lichtleiter haben in der Regel die Form eines Längszylinders mit rundem oder ovalem Querschnitt. Üblich ist auch ein Querschnitt in Form eines regelmäßigen Vielecks oder ein sogenannter pilzförmiger Querschnitt. Der Lichtleiter kann Teil eines länglichen Beleuchtungselements eines Kraftfahrzeugs an seiner Außenseite sowie im Inneren sein, z. B. Bremsleuchten am Heck des Fahrzeugs, Umrissleuchten, Fahrtrichtungsanzeiger an der Vorder- und Rückseite des Fahrzeugs oder an den Rückspiegeln, Kennzeichenbeleuchtung, Beleuchtung des Kühlergrills, Beleuchtung der Herstellermarke usw. Im Innenraum kann der Lichtleiter Teil der Beleuchtung der Türen, des Gepäckraums, der Deckenleuchten, des Armaturenbretts, des Bereichs um die Sitze usw. sein. Die Beleuchtungseinrichtung kann einen oder mehrere Lichtleiter umfassen.

Neben dem Lichtleiter und der Lichtquelle kann die Beleuchtungseinrichtung eines Kraftfahrzeugs noch weitere Bauteile aufweisen. Die Einrichtung kann einen Reflektor enthalten. Der Reflektor ist in der Regel Teil der Außenbeleuchtung von Kraftfahrzeugen und befindet sich an der Seite des Lichtleiters parallel zu dessen Längsachse. Seine primäre Funktion ist, das aus dem Lichtleiter ausgestrahlte Licht aus dem Fahrzeug heraus zu reflektieren. Der Reflektor regelt die Intensität der Lichtleistung und verbessert die Sichtbarkeit des Fahrzeugs für andere Fahrer. Der Reflektor besteht in der Regel aus Metall oder Kunststoff und hat eine glatte, glänzende Oberfläche, an der das Licht gut reflektiert werden kann. Seine Form und Geometrie sind so ausgelegt, um die Lichtstreuung und -richtung zu optimieren.

Die Beleuchtungseinrichtung kann ferner elektrische Bauteile wie bspw. Kabel umfassen, die die Lichtquelle mit dem Fahrzeugsystem verbinden. Die Kabel bestehen in der Regel aus Leitern, die mit einem Gummi- oder Kunststoffmantel isoliert sind, der die Leiter vor Beschädigungen schützt und sie gegen äußere Einflüsse isoliert. Zur Verbindung elektrischer Bauteile werden in der Regel verschiedene Arten von Steckverbindern verwendet. Ein weiterer Bestandteil des elektrischen Bauteils der Beleuchtungseinrichtung ist die Leiterplatte (PCB). Die Leiterplatte (PCB) dient als eine Plattform für die Verbindung von elektrischen Komponenten. Die Hauptfunktion der Leiterplatte (PCB) bei einer Beleuchtungseinrichtung besteht darin, dass eine Lichtquelle an sie angeschlossen wird. Die Leiterplatten (PCB) können auch integrierte Schaltkreise zur Steuerung von Lichtfunktionen enthalten, wie beispielsweise Helligkeitsregelung, Steuerung vom Blinken und andere fortschrittliche Funktionen. Der elektrische Anschluss der Leuchte wird in der Regel über einen Schalter gesteuert, mit dem der Fahrer die Leuchte nach Bedarf ein- und ausschalten kann. Der Schalter kann sich auf dem Armaturenbrett, der Schalttafel oder an der Leuchte selbst befinden.

Die Beleuchtungseinrichtung von Kraftfahrzeugen kann eine oder mehrere Beleuchtungseinheiten umfassen und diese sind im Falle von Außenleuchten in die Karosserie des Fahrzeugs oder im Falle von Innenleuchten in die Innenverkleidung des Fahrzeugs eingebaut. Die Beleuchtungseinrichtung ist in einer eigenen Montageplatte, die in der Regel aus Kunststoff oder Metall besteht, in das Fahrzeug integriert. Jede Beleuchtungseinrichtung ist in der Regel mit einer Abdeckung versehen, die die Lichtquelle und andere Komponenten vor äußeren Einflüssen wie Staub, Feuchtigkeit und Schmutz schützt. Die Abdeckungen der Leuchten können aus verschiedenen Materialien wie Glas oder Kunststoff bestehen und je nach Fahrzeugdesign unterschiedliche Formen und Strukturen aufweisen. Die Beleuchtungseinrichtungen sind in der Regel mit Dichtungen ausgestattet, die insbesondere die elektrischen Bauteile vor Feuchtigkeit und Schmutz schützen.

Die Lichtquelle kann auf einer Leiterplatte angebracht werden. Die Leiterplatte kann mit dem freien Ende des Lichtleiters durch eine lösbare feste Verbindung wie Verschraubung, Einsetzen in einen Schlitz, Einklipsen oder durch eine nicht lösbare Verbindung wie Kleben usw. verbunden werden. Bei der vorliegenden Erfindung kann diese Platte an das freie Ende des Lichtleiters anliegen, so dass die Lichtquelle in den Hohlraum des Endabschnitts des Lichtleiters auf die Fläche für den Lichteintritt gerichtet ist, vollständig in den Hohlraum versenkt ist oder zumindest teilweise in den Hohlraum hineinragt. Das Unterbringen der Lichtquelle in den Hohlraum ist vorteilhaft für die räumliche Anordnung des Lichtleiters und kann auch die Streuung der Strahlen von der Quelle außerhalb des Lichtleiters verringern. Die Lichtstrahlen breiten sich vom freien Ende des Lichtleiters in Richtung seines Körpers aus.

Der Endabschnitt des Lichtleiters umfasst mikroskopisches Aufrauen der Oberfläche für unkontrollierte Lichtstreuung und makroskopische streuende optische Elemente für kontrollierte Lichtstreuung. In diesem Abschnitt tritt das Licht in den Lichtleiter ein, seine Ausstrahlung ist in der Regel ungleichmäßig und hier ist seine Homogenisierung notwendig. Durch die Homogenisierung soll sichergestellt werden, dass der Endabschnitt des Lichtleiters gleichmäßiges Licht ausstrahlt und nicht beschattet oder in eine Platte im Fahrzeug eingebaut werden muss. Eine homogene Beleuchtung des Endabschnitts des Lichtleiters kann dazu beitragen, die gesamte Länge des Lichtleiters zu nutzen und so den Bauraum zu sparen. Die Homogenisierung des Lichts im Endabschnitt des Lichtleiters kann durch eine Kombination verschiedener Arten von Streuelementen erreicht werden.

Das Aufrauen der Oberfläche zur unkontrollierten Lichtstreuung dient dazu, das Licht gleichmäßig in alle Richtungen zu streuen. Unter Aufrauen der Oberfläche versteht man die Erhöhung der Oberflächenrauheit und -grobheit, um die gewünschten Eigenschaften zu erreichen. So wird das Licht beim Übergang durch eine Oberfläche mit einer bestimmten Rauheit gleichmäßig in den Raum gestreut, wodurch seine Schärfe verringert wird, das Licht wird weich, die Blendung und die Belastung der Augen des Benutzers wird reduziert.

Durch das Aufrauen der Oberfläche allein kann eine gerichtete Anordnung der Lichtstrahlen nicht erreicht werden, diese Streuung ist hier unkontrolliert - das Licht wird in alle Richtungen gestreut. Die Oberflächenbehandlung durch Aufrauen der Oberfläche wird häufig bei Beleuchtungseinrichtungen eingesetzt, z. B. bei Reflektoren, Diffusoren, Lichtplatten usw. Das Licht, das die aufgeraute Oberfläche durchdringt, erreicht einen bestimmten Grad an Streuung. Je rauer die Oberfläche, desto größer die Lichtstreuung, da das Licht mehrere Flächen hat, an denen es streuen kann. Für jede Beleuchtungseinrichtung gibt es einen optimalen Rauheitsgrad, der für die jeweilige Anwendung am besten geeignet ist. Die gewünschte Rauheit der Oberfläche kann chemisch (Ätzen) oder mechanisch (Schleifen, Laserbearbeitung, Pressen usw.) erreicht werden. Die aufgerauten Teile der Oberfläche des Lichtleiters dienen der gleichmäßigen Streuung der direkt von der Lichtquelle kommenden Lichtstrahlen, so dass der Endabschnitt des Lichtleiters nicht überbelichtet und zu scharf beleuchtet wird.

Das Aufrauen der Oberfläche kann z. B. mit der VDI-Skala gemessen werden. Die VDI-Skala liefert Zahlenwerte, die die Feinheit und Grobheit der Oberfläche beschreiben. Die Zahlen auf der Skala reichen von VDI 1 (sehr feine Oberfläche) bis VDI 45 (sehr grobe Oberfläche). Die Rauheit wird auf der Grundlage bestimmter geometrischer Merkmale der Oberfläche wie die Höhe der Unebenheiten, der Texturverteilung und anderer Faktoren bestimmt. Das Aufrauen der Oberfläche des erfindungsgemäßen Lichtleiters kann bei 10-45 VDI liegen, was einer Aufrauhung der Oberfläche von Ra = 0,32-18 µm entspricht.

Makroskopische streuende optische Elemente können verschiedene Formen aufweisen (z. B. Rillen, Wellen, Kerben, optische Polster, Streulinsen, Diffraktionslinsen, Diffraktionsgitter usw.). Es handelt sich um Oberflächenstrukturen mit klar definierter Form und Abmessungen. Die Abmessungen dieser Elemente liegen im Bereich von einigen Millimetern bis zu einigen zehn Zentimetern. Sie können je nach gewünschter Lichtstreuung und -brechung unterschiedliche Abmessungen und Anordnungen haben. Makroskopische streuende optische Elemente desselben Typs und/oder auch verschiedener Typen können sich in derselben Beleuchtungseinrichtung befinden.

Makroskopische streuende optische Elemente haben den Vorteil der kontrollierten Lichtstreuung, d.h. durch ihre geeignete Anordnung kann die Richtung und Intensität des Lichts verändert werden. Die Strahlen werden beim Durchgang durch eine Oberfläche mit Streuelementen nach dem Reflexionsgesetz gebrochen, ein Teil des Strahls wird reflektiert und ein Teil wird in die gewünschte Richtung gebrochen. Außerdem wird hier snelliussches Gesetz verwendet, das die Beziehung zwischen dem Brechungswinkel und den Brechungsindizes zweier Medien beschreibt, zwischen denen sich das Licht bricht. Das Brechungsgesetz besagt, dass das Verhältnis des Sinus der Brechungs- und des Einfallswinkel gleich dem Verhältnis der Brechungsindizes der beiden Medien ist.

Makroskopische streuende optische Elemente können mit optischer Design-Software entworfen werden. Die Software kann die Reflexion, Brechung und Streuung der Strahlen auswerten und modellieren und diese Berechnungen nutzen, um streuende optische Elemente zu entwerfen, die den Anforderungen der jeweiligen Anwendung entsprechen.

Makroskopische streuende optische Elemente im Lichtleiter der vorliegenden Erfindung steuern die Ausbreitungsrichtung der Lichtstrahlen von der Quelle und die Richtung ihres Austritts aus dem Lichtleiter in dessen Endabschnitt, wodurch eine gleichmäßige Belichtung des Endabschnitts des Lichtleiters erreicht wird.

Im Rahmen der vorliegenden Erfindung können die makroskopischen streuenden Elemente eine längliche Form mit einem abgerundeten Querschnitt und einer Breite von mindestens 0,1 mm haben. Die Tiefe der makroskopischen streuenden Elemente beträgt vorzugsweise mindestens 0,1 mm. Die Länge der makroskopischen streuenden Elemente entspricht den Teilen des Lichtleiters, auf die die Ausrichtung der Lichtstrahlen erwünscht wird. Die Elemente der vorliegenden Erfindung können vorteilhaft parallel zur Längsachse des Lichtleiters angeordnet werden.

Makroskopische streuende Elemente können Rillen sein. Makroskopische streuende Elemente können parallel zur Längsachse des Lichtleiters verlaufen.

Durch die Kombination des Aufrauens der Oberfläche und der makroskopischen streuenden optischen Elemente kann eine hohe Homogenität des Lichts in unmittelbarer Nähe seiner Quelle, d.h. im Endabschnitt des Lichtleiters, erreicht werden. Die Anordnung des Lichtleiters in der vorliegenden Erfindung nutzt einen Teil der Lichtstrahlen direkt von der Lichtquelle, ohne dass eine vorherige Reflexion erforderlich ist. Die direkt von der Quelle kommenden Strahlen, die nach dem Stand der Technik normalerweise beschattet oder durch Totalreflexion reflektiert werden, werden hier im Endabschnitt des Lichtleiters gestreut und homogenisiert. Die Homogenisierung der Strahlen erfolgt direkt von der Quelle, indem sie durch Oberflächen mit Oberflächenaufrauhung, makroskopische streuende optische Elemente und/oder eine Kombination aus diesen beiden Elementen geleitet werden.

Nach dem Durchgang durch den Endabschnitt des Lichtleiters werden die Strahlen in den Hauptabschnitt weitergeleitet, wo sie nach und nach aus dem Lichtleiter ausgekoppelt werden. Die Fläche für die Lichtauskopplung am Hauptabschnitt des Lichtleiters verläuft parallel zur optischen Längsachse des Lichtleiters und ist mit Auskopplungselementen für die Reflexion des Lichts aus dem Lichtleiter versehen. Die Auskopplungselemente können unterschiedliche Formen haben, z. B. Zähne, Kerben und Einkerbungen in Form eines V, Trapezes, Kegels, sie können rechteckig, konisch oder wellenförmig sein. Diese Elemente gewährleisten eine gleichmäßige Beleuchtung im Hauptabschnitt des Lichtleiters, indem sie die Lichtstrahlen aus dem Lichtleiter auskoppeln. Die Auskopplungselemente können gleichmäßig mit konstantem Abstand angeordnet werden, oder der Abstand kann auch variabel sein, je nach den Anforderungen an die Lichtauskopplung und der Art der Beleuchtungseinrichtung. Die Form und die Abmessung der Auskopplungsmittel können innerhalb eines Lichtleiters gleich oder variabel sein.

Der Endabschnitt kann vorzugsweise in einen ersten und einen zweiten Abschnitt unterteilt werden, wobei der erste Abschnitt mikroskopisches Aufrauen der Oberfläche und makroskopische streuende optische Elemente umfasst und der zweite Abschnitt nur makroskopische streuende optische Elemente umfasst.

Im ersten Abschnitt des erfindungsgemäßen Lichtleiters werden die Lichtstrahlen homogenisiert und direkt von der Quelle ausgerichtet. Das Aufrauen der Oberfläche kann zur gleichmäßigen Lichtstreuung und -verfeinerung genutzt werden, und es können makroskopische optische streuende Elemente, beispielsweise in Form von Rillen, angebracht werden, um das gestreute Licht in die gewünschte Richtung zu richten. Auf einem Teil dieser Flächen, die parallel zur Längsachse des Lichtleiters verlaufen, können Aufrauen und Rillen in Kombination vorgesehen werden. Die Kombination aus Aufrauen und Rillen sorgt für eine ausreichende Streuung der Strahlen direkt von der Lichtquelle, so dass der Endabschnitt des Lichtleiters nicht überbelichtet wird und gleichzeitig das Streulicht in die gewünschte Richtung gerichtet wird.

Das Aufrauen der Oberfläche kann vorzugsweise einen Rauhigkeitsbereich von Rₐ = 0,32 - 18 µm aufweisen.

Die makroskopischen streuenden optischen Elemente können vorzugsweise Rillen mit einem abgerundeten Querschnitt und einer Breite von mindestens 0,1 mm sein. Diese Rillen können parallel zur Längsachse des Lichtleiters verlaufen. Die Tiefe der Rillen kann mindestens 0,1 mm betragen.

Im zweiten Abschnitt können sich vorteilhaft nur makroskopische streuende optische Elemente, z.B. in Form von Rillen, befinden. Die Rillen regulieren die Richtung der Lichtstrahlen auf der Grundlage snelliussches Gesetzes und sorgen dafür, dass das Licht in der gewünschten Richtung aus dem Endabschnitt des Lichtleiters austritt. Die Flächen des ersten Abschnitts, die nicht parallel zur Längsachse des Lichtleiters verlaufen, können vorteilhafterweise nur ein Aufrauen der Oberfläche aufweisen. Diese Flächen enthalten dann keine makroskopischen streuenden optischen Elemente. Diese Anordnung ist auf die Optimierung des Produktionsprozesses zurückzuführen. Der Lichtleiter besteht in der Regel aus einem transparenten thermoplastischen Kunststoff (z. B. Acrylat oder Polycarbonat). Dieses Material wird in der Regel in einer Form heißgepresst, und die oben beschriebene Anordnung der optischen Elemente stellt sicher, dass kein Teil des Formteils in den Hinterschnitt gerät und die Formteile anschließend leicht aus der Form entformt werden können. Das Aufrauen der Oberfläche des Formteils kann durch einfaches Aufrauen der Oberfläche der Form erreicht werden. Durch diese vorteilhafte Anordnung der optischen Elemente wird eine ausreichende Homogenisierung des Lichts im Endabschnitt des Lichtleiters nicht beeinträchtigt.

Als Lichtquelle können bei der vorliegenden Erfindung vorzugsweise LEDs verwendet werden. Die LEDs haben eine Reihe von Vorteilen gegenüber Glühbirnen, z. B. einen geringeren Energieverbrauch. Außerdem haben sie eine längere Lebensdauer von bis zu zehntausend Stunden, während Glühbirnen nur einige tausend Stunden halten. Außerdem erzeugen die LEDs weniger Wärme, was aus konstruktiver Sicht vorteilhaft ist, da sich die Beleuchtungseinrichtung und das umgebende Material nicht erwärmen und keine Gefahr von Hitzeschäden besteht. Ein weiterer Vorteil von LEDs ist, dass sie sofort nach dem Einschalten die volle Leuchtkraft erreichen.

### Erklärung von Zeichnungen

Das Wesen der Erfindung wird weiterhin anhand von Ausführungsbeispielen erklärt, die mit Hilfe von beigefügten Zeichnungen beschrieben werden, die zeigen:
Fig. 1 eine schematische Darstellung des Längsschnitts durch den Lichtleiter,
Fig. 2 eine schematische Darstellung der Verteilung der optischen Strukturen: Aufrauen, makroskopische streuende optische Elemente und Auskopplungselemente, auf der Oberfläche des Lichtleiters,
Fig. 3 einen Querschnitt durch die makroskopischen streuenden optischen Elemente in Form von Rillen im ersten Abschnitt des Lichtleiters in einer Ebene senkrecht zur Längsachse des Lichtleiters,
Fig. 4 ein Diagramm des Austritts der Strahlen vom Lichtleiter auf den Reflektor. Die gepunktete Linie stellt hier das Aufrauen und die gestrichelte Linie die makroskopischen streuenden optischen Elemente dar,
Fig. 5 der Anschluss des Lichtleiters als Teil der hinteren Umrissleuchte an der fünften Tür des Fahrzeugs.

### Ausführungsbeispiele der Erfindung

Die Erfindung wird anhand von Ausführungsbeispielen unter Bezugnahme auf die entsprechenden Zeichnungen näher erläutert.

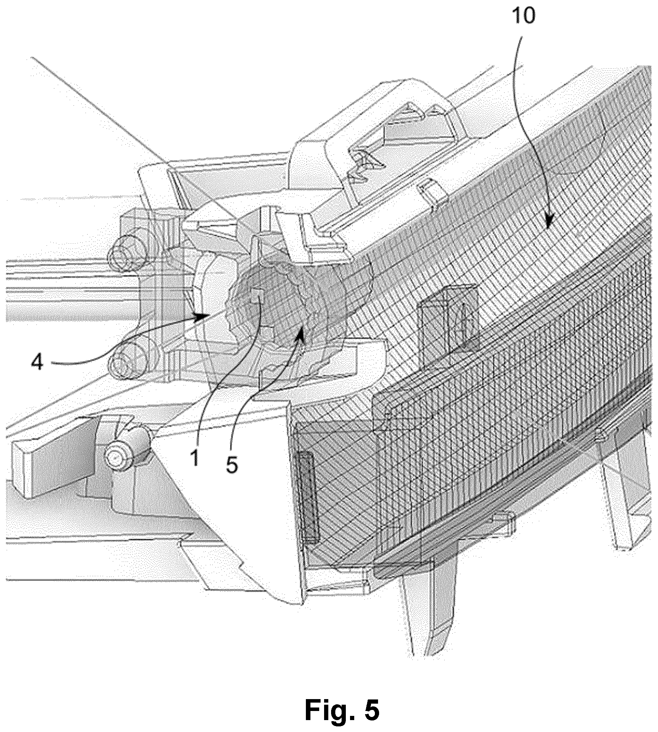

Bei der Beleuchtungseinrichtung gemäß der ersten Ausführung handelt es sich um eine hintere Umrissleuchte des Kraftfahrzeugs. Sie befindet sich in der fünften (hinteren) Tür des Fahrzeugs (Fig. 5). Die Beleuchtungseinrichtung gemäß der ersten Ausführung umfasst eine Lichtquelle 1 in Form einer roten LED, einen Lichtleiter aus thermoplastischem Acrylat, einen Farbfilter aus transparentem rotem Material, einen Kunststoffreflektor 10, eine Außenabdeckung, eine Dichtung, eine Montageplatte und eine Leiterplatte 9 mit elektronischen Bauteilen der Einrichtung, auf der auch die Lichtquelle 1 angeordnet ist. Der Lichtleiter befindet sich in der Abdeckung der Beleuchtungseinrichtung und das Licht wird vom Lichtleiter auf den Reflektor 10 gerichtet. Der Reflektor 10 reflektiert das Licht vom Fahrzeug nach außen durch einen Rotfilter, der die gewünschte Färbung der hinteren Umrissleuchte bewirkt.

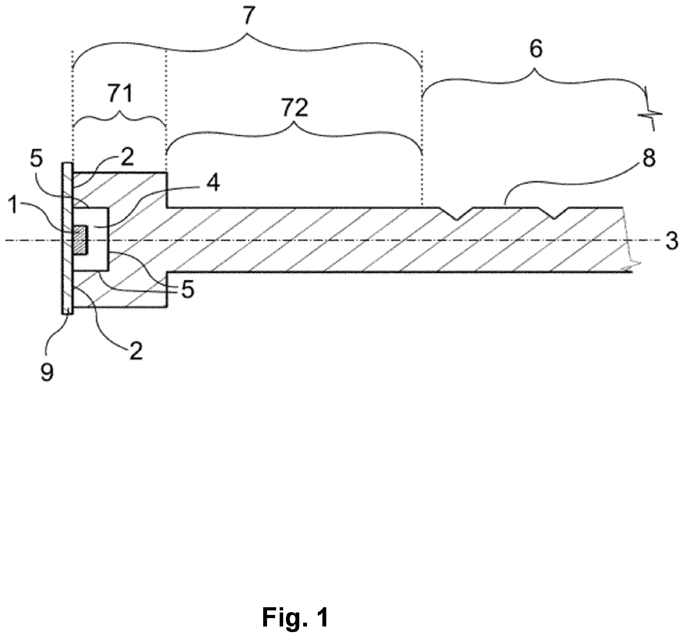

Der Lichtleiter im Ausführungsbeispiel in der Fig. 1 ist in einen Hauptabschnitt 6 und einen Endabschnitt 7 unterteilt. Der Endabschnitt 7 ist ferner in einen ersten Abschnitt 71 und einen zweiten Abschnitt 72 unterteilt. Der erste Abschnitt 71 des Lichtleiters umfasst ein freies Ende 2 für den Lichteintritt von der Quelle 1. Das freie Ende 2 bildet eine Randfläche des ersten Abschnitts 71 des Lichtleiters, die senkrecht zur Längsachse 3 des Lichtleiters auf der Seite des Lichteintritts liegt. Am freien Ende 2 ist mit Hilfe von Klammern eine Leiterplatte 9 befestigt, auf der eine Lichtquelle 1 in Form einer LED angebracht ist. Die Lichtquelle 1 befindet sich in einem Hohlraum 4 im ersten Abschnitt 71 des Lichtleiters. Die Wände dieses Hohlraums 4 stellen eine Fläche 5 für den Lichteintritt dar.

Der Hohlraum 4 ist im Ausführungsbeispiel ein Ausschnitt im ersten Abschnitt 71 des Lichtleiters. Der Hohlraum 4 wird durch einen Bogen des ersten Abschnitts 71 in Richtung des Lichtaustritts aus dem Lichtleiter sowie durch eine Wand des ersten Abschnitts 71 senkrecht zur Längsachse 3 des Lichtleiters in Richtung der Längsachse 3 begrenzt. Diese Abgrenzungen umfassen Flächen 5 für den Lichteintritt. Die Flächen 5 für den Lichteintritt sind hier die Innenfläche des Bogens des ersten Abschnitts 71 und die Wand des ersten Abschnitts 71 des Lichtleiters. Die Lichtquelle 1 ist eine LED, die auf einer Leiterplatte 9 angebracht ist. Durch das Anbringen der Leiterplatte 9 am freien Ende 2 des ersten Abschnitts 71 des Lichtleiters wird der Hohlraum 4 von der Richtung des Lichteintritts in den Lichtleiter verschlossen.

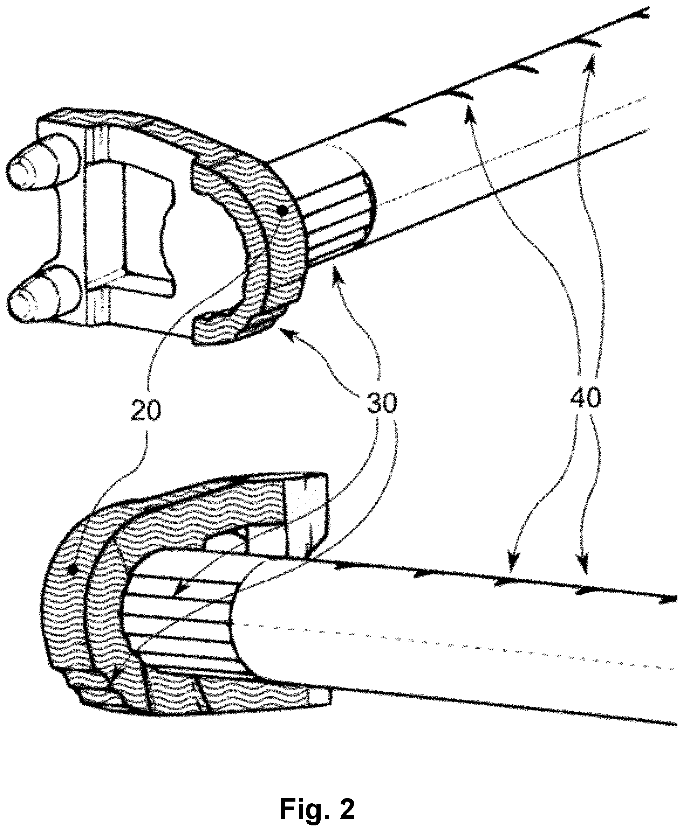

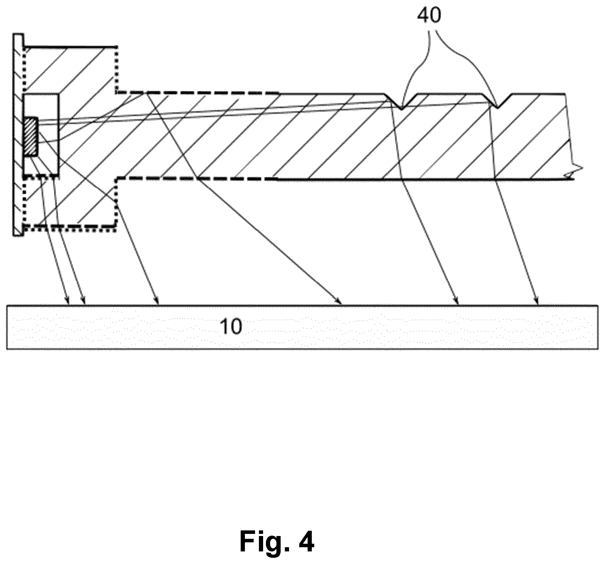

Das Licht breitet sich durch den ersten Abschnitt 71 und den zweiten Abschnitt 72 in den Hauptabschnitt 6 des Lichtleiters aus. Im Hauptabschnitt 6 wird das Licht in Richtung nach außen aus dem Lichtleiter mit Hilfe von Auskopplungselementen 40 ausgekoppelt. Die Auskopplungselemente 40 sind im Ausführungsbeispiel als V-förmige Zähne ausgebildet und auf einer Fläche 8 zur Lichtauskopplung parallel zur Längsachse 3 des Lichtleiters angeordnet (Fig. 1 und Fig. 2). Die Zähne haben verschiedene Winkel je nach Position des Lichtleiters und nach der gewünschten Richtung der Belichtung. Sie lenken die Lichtstrahlen in Richtung von der Fläche 8 zur Lichtauskopplung weg aus dem Lichtleiter auf den Reflektor 10, der sich an der hinteren Unterseite der Beleuchtungseinrichtung hinter dem Lichtleiter befindet und das Licht weiter aus dem Fahrzeug heraus reflektiert. Der Reflektor 10 besteht aus einem Kunststoffmaterial mit den für die Lichtreflexion erforderlichen Eigenschaften (Fig. 4).

Der Lichtleiter in der ersten Ausführung ist so konstruiert, dass seine gesamte Länge genutzt werden kann und somit seitlicher Einbauraum in der Montageplatte eingespart wird. Dieser Vorteil wird durch die Homogenisierung des Lichts im Endabschnitt 7 des Lichtleiters erreicht.

Homogenität des vom Endabschnitt 7 des Lichtleiters ausgestrahlten Lichts kann in der ersten Ausführung durch die Verwendung von zwei Arten von optischen Elementen erhöht werden: Aufrauen 20 der Oberfläche und makroskopische streuende optische Elemente 30 (siehe Fig. 2).

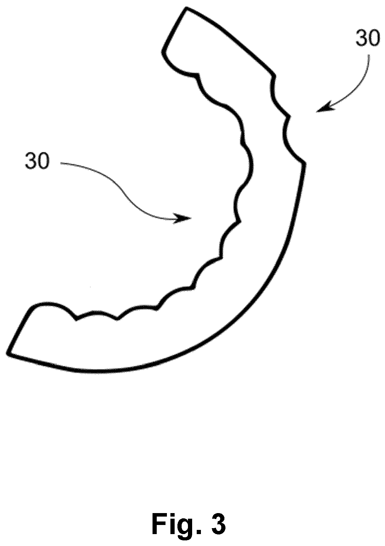

Das Aufrauen 20 der Oberfläche bei der ersten Ausführung weist eine körnige Struktur mit einem VDI-Skalenwert von 45 auf, was einer Aufrauhung der Oberfläche von Rₐ = a 18 µm entspricht. Die makroskopischen streuenden optischen Elemente 30 sind in der ersten Ausführung Rillen, die parallel zur Längsachse 3 des Lichtleiters angeordnet sind. Sie haben einen Querschnitt in Form eines Teilkreises und eine Breite von 1 mm. Einige der Rillen sind konvex und andere konkav ausgerichtet. Die Fig. 3 zeigt einen Querschnitt durch die Rillen des ersten Abschnitts 71, die in der ersten Ausführung verwendet werden, in einer Ebene senkrecht zur Längsachse 3. Das Aufrauen 20 der Oberfläche führt zu einer unkontrollierten Lichtstreuung in alle Richtungen und zu einer Verfeinerung. Die makroskopischen streuenden optischen Elemente 30 bewirken eine kontrollierte Streuung, d. h. sie lenken die Lichtstrahlen in die gewünschte Richtung. Diese Anordnung nutzt einen Teil der Lichtstrahlen direkt von der Quelle 1 ohne vorherige Reflexion. Die Strahlen aus der Quelle 1 werden durch eine Kombination aus dem Aufrauen 20 und der makroskopischen streuenden optischen Elementen 30 gestreut und gelenkt. Die Fig. 4 zeigt ein Diagramm des Austritts der Strahlen vom Lichtleiter. Die Kombination der optischen Elemente kann die gewünschte unkontrollierte Streuung des Lichts von der Quelle 1 unterstützen und gleichzeitig auch seine kontrollierte Lenkung in die gewünschte Richtung auf den Reflektor 10 (Fig. 4).

Der erste Abschnitt 71 hat in einer beispielhaften Ausführung die Form eines Bogens. Die Innenflächen des Bogens bilden eine Fläche 5 für den Lichteintritt. Der Außendurchmesser des ersten Abschnitts 71 ist größer als der Außendurchmesser des zweiten Abschnitts 72. Der erste Abschnitt 71 umfasst Flächen, die mit einem Aufrauen 20 von Ra = a 18 µm behandelt wurden, und Flächen, die eine Kombination aus dem Aufrauen 20 und makroskopischen streuenden optischen Elementen 30 in Form von Rillen mit einem Querschnitt in Form eines Teilkreises und einer Breite von 1 mm aufweisen. Die Kombination aus dem Aufrauen 20 und den Rillen befindet sich im ersten Abschnitt 71 auf einer Innenfläche des Bogens des ersten Abschnitts 71, die parallel zur Längsachse 3 verläuft, und auf einem Teil der Außenfläche des Bogens, der ebenfalls parallel zur Längsachse 3 verläuft und der Richtung des Lichtaustritts aus dem Lichtleiter entspricht. Die Rillen sind parallel zur Längsachse 3 des Lichtleiters angeordnet (Fig. 2).

Auf den Flächen des ersten Abschnitts 71, die senkrecht zur Längsachse 3 des Lichtleiters verlaufen, wird nur das Aufrauen 20 der Oberfläche (Fig. 2) angebracht, um den Produktionsprozess zu optimieren und die Entnahme des fertigen Formteils des Lichtleiters aus der Form zu erleichtern. Der Lichtleiter gemäß der ersten Ausführung wird aus thermoplastischem Acrylat im Heißspritzgussverfahren hergestellt. Die Oberflächenstruktur wird also durch die Formgestaltung bestimmt. Durch die oben beschriebene Anordnung der Oberflächenstrukturen gerät kein Teil des Formteils in den Hinterschnitt, so dass das Herausziehen des fertigen Formteils aus der Form einfach und effizient ist.

Der zweite Abschnitt 72 des Lichtleiters hat in einer beispielhaften Ausführung eine zylindrische Form und schließt an den ersten Abschnitt 71 an. Im zweiten Abschnitt 72 befinden sich nur makroskopische optische streuende Elemente 30 in Form von Rillen mit einem Querschnitt in Form eines Teilkreises und einer Breite von 1 mm (Fig. 2). Die Rillen sind parallel zur Längsachse 3 des Lichtleiters angeordnet. Mit Rillen ist ein Teil des zweiten Abschnitts 72 des Lichtleiters versehen, der der Richtung des Lichtaustritts aus dem Lichtleiter entspricht. Die Rillen verbessern die kontrollierte Richtung der Lichtstrahlen vom Lichtleiter nach außen auf den Reflektor 10 (Fig. 4). Die Lenkung der Strahlrichtung kann durch die richtige Form und Anordnung der streuenden Elemente erreicht werden. Der Entwurf der Anordnung der streuenden Elemente für das Ausführungsbeispiel wurde mit einer Software für optische Modellierung erstellt.

Im Hauptabschnitt 6 des Lichtleiters erfolgt die Lichtauskopplung in Richtung zum Reflektor 10 hin mit Hilfe der bereits erwähnten Auskopplungselemente 40 (Fig. 4).

Die Beleuchtungseinrichtung ist auch mit einem Farbfilter des Lichtleiters versehen. Nach der ersten Ausführung besteht der Filter roter Farbe aus einem roten Diffusionsmaterial DF23, um eine charakteristische Färbung der hinteren Umrissleuchte zu erzielen, und befindet sich am Austritt des vom Reflektor 10 der Beleuchtungseinrichtung reflektierten Lichts (Fig. 5).

### Bezugszeichenliste

- 1 -: Lichtquelle
- 2 -: freies Ende
- 3 -: optische Längsachse
- 4 -: Hohlraum
- 5 -: Fläche für den Lichteintritt
- 6 -: Hauptabschnitt
- 7 -: Endabschnitt
- 71 -: erster Abschnitt
- 72 -: zweiter Abschnitt
- 8 -: Fläche zur Lichtauskopplung
- 9 -: Leiterplatte
- 10 -: Reflektor
- 20 -: Aufrauen
- 30 -: makroskopische streuende optische Elemente
- 40 -: Auskopplungselemente

## Patentansprüche

1. Beleuchtungseinrichtung für Kraftfahrzeuge, umfassend eine Lichtquelle (1) und einen Lichtleiter aus transparentem Material,
- wobei der Lichtleiter einen Hauptabschnitt (6), einen Endabschnitt (7) und mindestens ein freies Ende (2) umfasst,
- wobei der Endabschnitt (7) zwischen dem freien Ende (2) und dem Hauptabschnitt (6) angeordnet ist und einen Hohlraum (4) und eine Fläche (5) für den Lichteintritt aufweist, wobei die Längsachse (3) des Lichtleiters durch den Hohlraum (4) verläuft und der Hohlraum (4) am freien Ende (2) des Lichtleiters offen ist,
- wobei die Lichtquelle (1) in den Hohlraum (4) hineinreicht und auf die Fläche (5) für den Lichteintritt in Richtung der Längsachse (3) des Lichtleiters gerichtet ist.
- wobei der Hauptabschnitt (6) eine Fläche (8) zur Lichtauskopplung parallel zur Längsachse (3) des Lichtleiters aufweist und mit Auskopplungselementen (40) zum Reflektieren des Lichts aus dem Lichtleiter versehen ist,
**dadurch gekennzeichnet, dass**
- der Endabschnitt (7) des Lichtleiters ein mikroskopisches Aufrauen (20) der Oberfläche für unkontrollierte Lichtstreuung und makroskopische streuende optische Elemente (30) für kontrollierte Lichtstreuung umfasst.

2. Beleuchtungseinrichtung nach Anspruch 1, **dadurch gekennzeichnet, dass** der Endabschnitt (7) in einen ersten Abschnitt (71) und einen zweiten Abschnitt (72) unterteilt ist, wobei der erste Abschnitt (71) ein mikroskopisches Aufrauen (20) der Oberfläche und makroskopische streuende optische Elemente (30) umfasst und der zweite Abschnitt (72) nur makroskopische streuende optische Elemente (30) umfasst.

3. Beleuchtungseinrichtung nach einem der vorhergehenden Ansprüche, **dadurch gekennzeichnet, dass** das Aufrauen (20) der Oberfläche einen Rauhigkeitsbereich von Rₐ = 0,5 - 18 µm aufweist.

4. Beleuchtungseinrichtung nach einem der vorhergehenden Ansprüche, **dadurch gekennzeichnet, dass** die zur Längsachse (3) des Lichtleiters nicht parallelen Flächen des ersten Abschnitts nur ein Aufrauen (20) der Oberfläche aufweisen.

5. Beleuchtungseinrichtung nach einem der vorhergehenden Ansprüche, **dadurch gekennzeichnet, dass** die makroskopischen streuenden optischen Elemente (30) längliche Elemente mit einem abgerundeten Querschnitt und einer Breite von mindestens 0,1 mm sind.

6. Beleuchtungseinrichtung nach Anspruch 5, **dadurch gekennzeichnet, dass** die länglichen Elemente Rillen sind.

7. Beleuchtungseinrichtung nach Anspruch 5 oder 6, **dadurch gekennzeichnet, dass** die makroskopischen streuenden optischen Elemente (30) parallel zur Längsachse (3) des Lichtleiters ausgerichtet sind.

8. Beleuchtungseinrichtung nach einem der vorhergehenden Ansprüche, **dadurch gekennzeichnet, dass** die Lichtquelle (1) eine LED ist.

## Claims

1. A lighting apparatus for motor vehicles, comprising a light source (1) and a light guide made of transparent material,
- wherein the light guide comprises a main section (6), an end section (7) and at least one free end (2),
- wherein the end section (7) is arranged between the free end (2) and the main section (6) and has a cavity (4) and a surface (5) for the entry of light, wherein the longitudinal axis (3) of the light guide extends through the cavity (4) and the cavity (4) is open at the free end (2) of the light guide,
- wherein the light source (1) extends into the cavity (4) and is directed onto the surface (5) for the entry of light in the direction of the longitudinal axis (3) of the light guide.
- wherein the main section (6) has a surface (8) for light decoupling parallel to the longitudinal axis (3) of the light guide and is provided with decoupling elements (40) for reflecting the light from the light guide,
**characterized in that**
- the end section (7) of the light guide comprises a microscopic roughening (20) of the surface for uncontrolled light scattering and macroscopic scattering optical elements (30) for controlled light scattering.

2. The lighting apparatus according to claim 1, **characterized in that** the end section (7) is divided into a first section (71) and a second section (72), wherein the first section (71) comprises a microscopic roughening (20) of the surface and macroscopic scattering optical elements (30) and the second section (72) comprises only macroscopic scattering optical elements (30).

3. The lighting apparatus according to any one of the preceding claims, **characterized in that** the roughening (20) of the surface has a roughness range of Rₐ = 0.5 -18 µm.

4. The lighting apparatus according to any one of the preceding claims, **characterized in that** the surfaces of the first section which are not parallel to the longitudinal axis (3) of the light guide only have a roughening (20) of the surface.

5. The lighting apparatus according to any one of the preceding claims, **characterized in that** the macroscopic scattering optical elements (30) are elongated elements with a rounded cross-section and a width of at least 0.1 mm.

6. The lighting apparatus according to claim 5, **characterized in that** the elongated elements are grooves.

7. The lighting apparatus according to claim 5 or 6, **characterized in that** the macroscopic scattering optical elements (30) are aligned parallel to the longitudinal axis (3) of the light guide.

8. The lighting apparatus according to any one of the preceding claims, **characterized in that** the light source (1) is an LED.

## Revendications

1. Dispositif d'éclairage pour véhicules automobiles comprenant une source de lumière (1) et un guide de lumière en matériau transparent,
- dans lequel le guide de lumière comprend une section principale (6), une section d'extrémité (7) et au moins une extrémité libre (2),
- dans lequel la section d'extrémité (7) est agencée entre l'extrémité libre (2) et la section principale (6) et présente un espace creux (4) et une surface (5) pour l'entrée de lumière, dans lequel l'axe longitudinal (3) du guide de lumière s'étend à travers l'espace creux (4), et l'espace creux (4) est ouvert au niveau de l'extrémité libre (2) du guide de lumière,
- dans lequel la source de lumière (1) pénètre dans l'espace creux (4) et est dirigée sur la surface (5) pour l'entrée de lumière en direction de l'axe longitudinal (3) du guide de lumière,
- dans lequel la section principale (6) présente une surface (8) pour le découplage de lumière parallèlement à l'axe longitudinal (3) du guide de lumière et est pourvue d'éléments de découplage (40) pour la réflexion de la lumière hors du guide de lumière,
**caractérisé en ce que**
- la section d'extrémité (7) du guide de lumière comprend un grainage (20) microscopique de la surface pour une diffusion de lumière non contrôlée et des éléments optiques (30) diffusants macroscopiques pour une diffusion de lumière contrôlée.

2. Dispositif d'éclairage selon la revendication 1, **caractérisé en ce que** la section d'extrémité (7) est divisée en une première section (71) et en une seconde section (72), dans lequel la première section (71) comprend un grainage (20) microscopique de la surface et des éléments optiques (30) diffusants macroscopiques, et la seconde section (72) comprend uniquement des éléments optiques (30) diffusants macroscopiques.

3. Dispositif d'éclairage selon l'une quelconque des revendications précédentes, **caractérisé en ce que** le grainage (20) de la surface présente une plage de rugosité de Rₐ = 0,5 à 18 µm.

4. Dispositif d'éclairage selon l'une quelconque des revendications précédentes, **caractérisé en ce que** les surfaces non parallèles à l'axe longitudinal (3) du guide de lumière de la première section présentent uniquement un grainage (20) de la surface.

5. Dispositif d'éclairage selon l'une quelconque des revendications précédentes, **caractérisé en ce que** les éléments optiques (30) diffusants macroscopiques sont des éléments oblongs avec une section transversale arrondie et une largeur d'au moins 0,1 mm.

6. Dispositif d'éclairage selon la revendication 5, **caractérisé en ce que** les éléments oblongs sont des rainures.

7. Dispositif d'éclairage selon la revendication 5 ou 6, **caractérisé en ce que** les éléments optiques (30) diffusants macroscopiques sont orientés parallèlement à l'axe longitudinal (3) du guide de lumière.

8. Dispositif d'éclairage selon l'une quelconque des revendications précédentes, **caractérisé en ce que** la source de lumière (1) est une LED.
